# EUROPEAN PATENT APPLICATION

(11) **EP 4 852 125 A1**
(43) Date of publication of application: **09.12.2026**
(21) Application number: 25748231.5
(22) Date of filing: 20.01.2025
(51) Int. Cl.: H01M 10/0568, H01M 4/38, H01M 10/052, H01M 10/0567

(54) **NON-AQUEOUS ELECTROLYTIC SOLUTION AND NON-AQUEOUS ELECTROLYTE SECONDARY BATTERY**

(30) Priority: 31.01.2024 JP 2024013356
(71) Applicant: Panasonic Intellectual Property Management Co., Ltd., Kadoma-shi, Osaka 571-0057 (JP)
(72) Inventor: SATO, Kento, Kadoma-shi, Osaka 571-0057 (JP); SAGARA, Akihiko, Kadoma-shi, Osaka 571-0057 (JP)
(74) Representative: Novagraaf International SA
(86) International application number: PCT/JP2025/001643
(87) International publication number: WO 2025/164422

(57) **Abstract**

A nonaqueous electrolyte solution according to the present disclosure includes: a nonaqueous solvent; a phosphorus-containing compound; and two or more electrolyte salts dissolved in the nonaqueous solvent, wherein the two or more electrolyte salts include a first lithium salt having an oxalate structure and a second lithium salt. The first lithium salt may include at least one selected from the group consisting of LiFOB, LiBOB, LiTFOP, and LiDOBFP.

## Description

### TECHNICAL FIELD

The present disclosure relates to a nonaqueous electrolyte solution and a nonaqueous electrolyte secondary battery.

### BACKGROUND ART

As is known to those skilled in the art, electrolyte solutions of conventional batteries contain various components. For example, Patent Literature 1 discloses that a nonaqueous electrolyte secondary battery including vinylene carbonate as a nonaqueous solvent has favorable cycle characteristics.

### CITATION LIST

### Patent Literature

Patent Literature 1: JP 2005-268230 A

### SUMMARY OF INVENTION

### Technical Problem

The present disclosure provides a nonaqueous electrolyte solution suitable for enhancing the cycle characteristics of a battery.

### Solution to Problem

The present disclosure provides a nonaqueous electrolyte solution including:
a nonaqueous solvent;
a phosphorus-containing compound; and
two or more electrolyte salts dissolved in the nonaqueous solvent, wherein
the two or more electrolyte salts include a first lithium salt having an oxalate structure and a second lithium salt.

### Advantageous Effects of Invention

According to the technique of the present disclosure, the cycle characteristics of a battery can be enhanced.

### BRIEF DESCRIPTION OF DRAWINGS

FIG. 1 is a cross-sectional view schematically showing an example of a nonaqueous electrolyte secondary battery according to Embodiment 2.
FIG. 2 is a diagram showing structural formulas of various first lithium salts.

### DESCRIPTION OF EMBODIMENTS

Embodiments of the present disclosure are described below with reference to the drawings. The present disclosure is not limited to the embodiments described below.

### (Embodiment 1)

A nonaqueous electrolyte solution according to Embodiment 1 includes a nonaqueous solvent, a phosphorus-containing compound, and two or more electrolyte salts dissolved in the nonaqueous solvent. The two or more electrolyte salts include a first lithium salt and a second lithium salt. The first lithium salt has an oxalate structure. When a battery using the nonaqueous electrolyte solution according to Embodiment 1 is operated, the phosphorus-containing compound included in the nonaqueous electrolyte solution forms a coating film on the surface of the positive electrode. Accordingly, oxidative decomposition of the solvent at the interface between the nonaqueous electrolyte solution and the positive electrode can be suppressed. Furthermore, even when the coating film becomes damaged over time and through repeated charging and discharging, the phosphorus-containing compound included in the nonaqueous electrolyte solution is capable of repairing the coating film. Accordingly, the nonaqueous electrolyte solution of the present disclosure can achieve an effect of suppressing the oxidative decomposition of the solvent for a long period of time, as compared with, for example, a battery assembled using a positive electrode having a coating film directly formed thereon. Therefore, the nonaqueous electrolyte solution according to Embodiment 1 can enhance the cycle characteristics of a battery.

Here, the phosphorus-containing compound tends to increase the viscosity of the nonaqueous electrolyte solution. From the viewpoints of lithium-ion conductivity and low-temperature characteristics, it is generally desirable that the viscosity of the nonaqueous electrolyte solution be low. Therefore, it is desirable to reduce the viscosity of the nonaqueous electrolyte solution while maintaining the effect of the phosphorus-containing compound in enhancing cycle characteristics.

The nonaqueous electrolyte solution according to Embodiment 1 includes two or more electrolyte salts. The two or more electrolyte salts include a first lithium salt having an oxalate structure. The first lithium salt reduces the viscosity of the nonaqueous electrolyte solution while maintaining the effect of the phosphorus-containing compound in enhancing cycle characteristics. The effect of reducing the viscosity of the nonaqueous electrolyte solution is due to the large surface area of the anion included in the oxalate structure. The surface area of the anion can be determined by theoretical calculation.

As used herein, the term "oxalate structure" means a structure formed by coordination of an oxalate ion to an atom such as boron (B) or phosphorus (P).

The first lithium salt can exhibit an effect of reducing the volume of gas generated, depending on its concentration in the nonaqueous electrolyte solution.

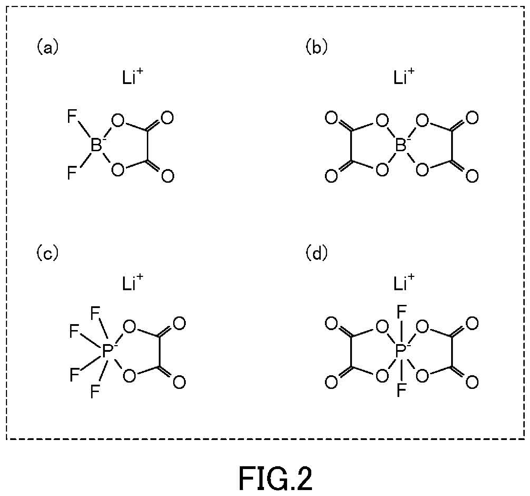

FIG. 2 is a diagram showing structural formulas of various first lithium salts. The first lithium salt may include at least one selected from the group consisting of lithium difluorooxalatoborate (LiFOB) in FIG. 2(a), lithium bisoxalatoborate (LiBOB) in FIG. 2(b), lithium tetrafluoro(oxalato)phosphate (LiTFOP) in FIG. 2(c), and lithium bisoxalatodifluorophosphate (LiDOBFP) in FIG. 2(d). With these first lithium salts, the viscosity of the nonaqueous electrolyte solution can be easily reduced while the effect of the phosphorus-containing compound is maintained.

The first lithium salt is dissolved in the nonaqueous solvent at a concentration of, for example, 0.005 mol/L or more and 0.70 mol/L or less. In other words, the concentration of the first lithium salt in the portion of the nonaqueous electrolyte solution from which the phosphorus-containing compound is excluded is, for example, 0.005 mol/L or more and 0.70 mol/L or less. By appropriately adjusting the concentration of the first lithium salt, the effect of the first lithium salt can be achieved while the required performance of the nonaqueous electrolyte solution is maintained. The first lithium salt may be dissolved in the nonaqueous solvent at a concentration of desirably more than 0.03 mol/L and less than 0.25 mol/L, and more desirably 0.04 mol/L or more and 0.15 mol/L or less. The "portion of the nonaqueous electrolyte solution from which the phosphorus-containing compound is excluded" can be a liquid-phase portion of the nonaqueous electrolyte solution.

Examples of the second lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, and LiCF₃SO₃. A lithium salt selectable as the first lithium salt may also be used as the second lithium salt. At least one selected from the above-described substances can be used as the second lithium salt. The second lithium salt may contain fluorine (F).

The second lithium salt may include LiPF₆. LiPF₆ is a lithium salt having excellent characteristics and is accordingly recommended as the second lithium salt. On the other hand, a nonaqueous electrolyte solution including a phosphorus-containing compound and LiPF₆ tends to have a high viscosity. Accordingly, LiPF₆ is desirably used in combination with the first lithium salt having an oxalate structure.

The concentration of the electrolyte salts in the nonaqueous electrolyte solution may be, for example, 0.5 mol/L or more and 2 mol/L or less. By controlling the concentration of the electrolyte salts within the above range, a nonaqueous electrolyte solution having excellent ionic conductivity and moderate viscosity can be obtained. However, the concentration of the electrolyte salts is not limited to the above range.

The proportion of the first lithium salt in the electrolyte salts, on an amount-of-substance basis, may be equal to the proportion of the second lithium salt in the electrolyte salts or smaller than the proportion of the second lithium salt in the electrolyte salts. According to such a configuration, the characteristics of the second lithium salt have a dominant influence on the nonaqueous electrolyte solution, and accordingly, the type of the second lithium salt can be easily selected such that a nonaqueous electrolyte solution having desired performance is obtained.

However, the ratio between the first lithium salt and the second lithium salt is not particularly limited. In one example, the ratio between the first lithium salt and the second lithium salt, on an amount-of-substance basis, is in a range of 0.005:0.995 to 0.5:0.5, and may be in a range of 0.01:0.99 to 0.5:0.5, or in a range of 0.04:0.96 to 0.15:0.85. The ratio of the first lithium salt to the total amount of lithium salts, on an amount-of-substance basis, may be 0.005 or more and 0.5 or less, 0.01 or more and 0.5 or less, or 0.04 or more and 0.15 or less.

The nonaqueous electrolyte solution according to Embodiment 1 is, at 25°C, for example, in a liquid state. The term "liquid state" includes sols. The nonaqueous electrolyte solution according to Embodiment 1 can have fluidity at 25°C.

In the present disclosure, the term "having fluidity at 25°C" means having a viscosity of 20,000 mPa·s or less at 25°C.

The viscosity of the nonaqueous electrolyte solution according to Embodiment 1 at 25°C may be 5,000 mPa·s or less, 3,000 mPa·s or less, or 1,000 mPa·s or less.

The phosphorus-containing compound may be insoluble in the nonaqueous solvent. The nonaqueous electrolyte solution according to Embodiment 1 may include particles of the phosphorus-containing compound insoluble in the nonaqueous solvent. The nonaqueous electrolyte solution according to Embodiment 1 may be a nonaqueous colloidal solution in which the particles of the phosphorus-containing compound are dispersed.

In the present disclosure, the term "particles of a phosphorus-containing compound insoluble in a nonaqueous solvent" means particles of a phosphorus-containing compound for which 100 mL or more of a nonaqueous solvent is required to dissolve 1 g at 25°C. That is, the solubility of the particles of the phosphorus-containing compound in 100 mL of the nonaqueous solvent is 1 g or less. Here, the term "dissolve" means that, when the particles of the phosphorus-containing compound are added, for dissolution, to the nonaqueous solvent in a container, both of the following are satisfied: the resulting solution exhibits no change in transmittance relative to the solvent, that is, the solution exhibits no turbidity; and no sediment is observed on the bottom surface of the container after standing for 24 hours.

The particles of the phosphorus-containing compound may be particles of a phosphorus-containing compound having a solubility of 0.1 g or less in 100 mL.

Examples of the phosphorus-containing compound include an inorganic phosphorus compound. The phosphorus-containing compound may include phosphoric acid or a phosphate compound. Examples of the phosphate compound include an inorganic phosphate. The phosphoric acid may include phosphorous acid, and the phosphate compound may include a phosphite. The phosphorus-containing compound desirably includes a PO₄ skeleton. The phosphorus-containing compound may include an organophosphorus compound. Examples of the organophosphorus compound include a phosphate ester including a PO₄ skeleton.

The phosphorus-containing compound may include at least one selected from the group consisting of Li₃PO₄, Na₃PO₄, K₃PO₄, LiPO₃, LiPO₃F, metaphosphoric acid, P₂O₅, and calcium phosphate. Examples of the calcium phosphate include hydroxyapatite. The phosphorus-containing compound may include at least one selected from the group consisting of Li₃PO₄, Na₃PO₄, K₃PO₄, LiPO₃, LiPO₃F, metaphosphoric acid, and P₂O₅. The phosphorus-containing compound may include at least one selected from the group consisting of Li₃PO₄, Na₃PO₄, LiPO₃, LiPO₃F, metaphosphoric acid, and P₂O₅.

The phosphorus-containing compound may include Li₃PO₄. That is, the nonaqueous electrolyte solution according to Embodiment 1 may include particles of Li₃PO₄. According to the above configuration, the cycle characteristics of a battery can be enhanced.

The phosphorus-containing compound may include at least one selected from the group consisting of magnesium, strontium, and barium. Magnesium, strontium, and barium, which are classified as alkaline earth metals, tend to have an oxidation state of +2 in phosphorus-containing compounds. Accordingly, when magnesium, strontium, and barium are included in the phosphorus-containing compound, the Coulomb force between these elements and phosphorus is strengthened, stabilizing the phosphorus-containing compound.

The phosphorus-containing compound including at least one selected from the group consisting of magnesium, strontium, and barium can be an inorganic phosphorus compound. The phosphorus-containing compound may include, as an alkaline earth metal element, only one selected from the group consisting of magnesium, strontium, and barium. Such a phosphorus-containing compound can be synthesized relatively easily or can be obtained as a commercially available reagent.

The phosphorus-containing compound may include MₓP₂O_{y} (1 ≤ x ≤ 3, 5 ≤ y ≤ 10). M includes at least one selected from the group consisting of magnesium, strontium, and barium. According to such a compound, an effect of enhancing the output characteristics of a battery can be achieved. M may be magnesium, strontium, or barium.

The phosphorus-containing compound may include at least one selected from the group consisting of a phosphate and a pyrophosphate. A phosphate is a salt of an alkaline earth metal ion and a phosphate ion (PO₄²⁻). A pyrophosphate is a salt of an alkaline earth metal ion and a pyrophosphate ion (P₂O₇⁴⁻).

The phosphorus-containing compound may include a transition metal element in addition to the alkaline earth metal element.

The phosphorus-containing compound may include at least one selected from the group consisting of Sr₃(PO₄)₂, Ba₃(PO₄)₂, and Ba₂P₂O₇. According to such a compound, an effect of enhancing the output characteristics of a battery can be sufficiently achieved.

A phosphorus-containing compound including at least one selected from the group consisting of magnesium, strontium, and barium may be used in combination with another phosphorus-containing compound described above.

The phosphorus-containing compound may be a compound that does not include lithium. The phosphorus-containing compound can be a material different from an electrolyte usually contained in the nonaqueous electrolyte solution.

The phosphorus-containing compound may be a compound that does not include water of crystallization. When the phosphorus-containing compound does not include water of crystallization, deterioration in battery performance due to moisture can be avoided.

The content of the particles of the phosphorus-containing compound in the nonaqueous electrolyte solution according to Embodiment 1 may be 0.1 vol% or more and 10 vol% or less. The content of the particles of the phosphorus-containing compound may be 0.1 vol% or more and 8 vol% or less, 0.5 vol% or more and 6 vol% or less, 1 vol% or more and 5 vol% or less, or 1 vol% or more and 4 vol% or less. According to the above configuration, favorable dispersibility of the particles of the phosphorus-containing compound and favorable fluidity of the nonaqueous electrolyte solution can be achieved.

When the nonaqueous electrolyte solution according to Embodiment 1 includes the particles of the phosphorus-containing compound, the content of the particles of the phosphorus-containing compound can be determined, for example, by the following method. The volume of the nonaqueous electrolyte solution is measured, and then the nonaqueous electrolyte solution is filtered through a filter to separate the particles. The separated particles are washed with a solvent such as dimethyl carbonate and dried by evaporating the washing solvent, after which the mass of the particles is measured. The volume of the particles is calculated from the mass of the particles and the specific gravity determined from the components of the particles. The components of the particles can be determined by various analytical methods, such as inductively coupled plasma spectrometry (ICP), X-ray diffractometry (XRD), infrared absorption spectroscopy (IR), and nuclear magnetic resonance spectroscopy (NMR). Thus, the content of the particles of the phosphorus-containing compound in the nonaqueous electrolyte solution can be calculated. Additionally, the volume of the nonaqueous electrolyte solution can also be calculated from the composition and mass thereof. The composition of the nonaqueous electrolyte solution can be measured by liquid chromatography, gas chromatography, or the like.

The particles of the phosphorus-containing compound may be nanoparticles.

The average particle diameter of the particles of the phosphorus-containing compound may be 1 nm or more and 500 nm or less. According to the above configuration, the dispersibility of the particles of the phosphorus-containing compound in the nonaqueous electrolyte solution is enhanced, making it possible to enhance the industrial productivity of the nonaqueous electrolyte solution. The average particle diameter of the particles of the phosphorus-containing compound may be 5 nm or more and 400 nm or less, or 10 nm or more and 300 nm or less. When the average particle diameter of the particles of the phosphorus-containing compound is 500 nm or less, in a battery using the nonaqueous electrolyte solution of the present disclosure, during permeation of the nonaqueous electrolyte solution into the positive electrode active material layer, the particles of the phosphorus-containing compound can penetrate between the positive electrode active material particles disposed within the positive electrode active material layer. Accordingly, a coating film of the phosphorus-containing compound is also formed on the surface of the positive electrode active material disposed within the positive electrode active material layer, and therefore, the oxidative decomposition of the solvent within the positive electrode active material layer can be suppressed.

The average particle diameter of the particles of the phosphorus-containing compound may be equal to or smaller than the pore diameter of the separator in a battery using the nonaqueous electrolyte solution. According to the above configuration, the particles of the phosphorus-containing compound do not clog the pores of the separator, and accordingly, the distribution of the electrolyte solution within the electrode group is not hindered even during charging and discharging.

In the present disclosure, the average particle diameter refers to the median diameter (d50). The median diameter is the particle diameter at a cumulative volume equal to 50% in the volume-based particle size distribution. The volume-based particle size distribution can be determined by laser diffraction scattering using a commercially available laser diffractometer.

The nonaqueous solvent is not particularly limited, and for example, a cyclic carbonate, a chain carbonate, or a cyclic carboxylic acid ester is used.

Examples of cyclic carbonates include propylene carbonate (PC) and ethylene carbonate (EC).

Examples of chain carbonates include diethyl carbonate (DEC), ethyl methyl carbonate (EMC), and dimethyl carbonate (DMC).

Examples of cyclic carboxylic acid esters include γ-butyrolactone (GBL) and γ-valerolactone (GVL).

One nonaqueous solvent may be used alone, or two or more nonaqueous solvents may be used in combination. The nonaqueous solvent may include ethylene carbonate. In this case, the solubility of the electrolyte, such as a lithium salt, in the nonaqueous solvent can be enhanced.

The nonaqueous electrolyte solution according to Embodiment 1 may further include other substances in addition to those described above. For example, the nonaqueous electrolyte solution according to Embodiment 1 may further include an additive to enhance the dispersibility of the particles of the phosphorus-containing compound. The additive is, for example, a fluorine-containing solvent. That is, the nonaqueous electrolyte solution according to Embodiment 1 may further include a fluorine-containing solvent. According to the above configuration, agglomeration of the particles of the phosphorus-containing compound over time and the resulting settling of the particles can be reduced.

Examples of the fluorine-containing solvent include a fluorinated cyclic ester and a fluorinated ether. The fluorinated cyclic ester may include fluoroethylene carbonate. The fluorinated ether may include 1,1,2,2-tetrafluoroethyl-2,2,2-trifluoroethyl ether.

The nonaqueous electrolyte solution according to Embodiment 1 can be manufactured, for example, by the following method.

Two or more electrolyte salts are dissolved in a nonaqueous solvent. The solution thus obtained, the above-described phosphorus-containing compound, and ZrO₂ balls as a mixing medium are mixed using a ball mill. The mixing medium is removed from the resulting liquid mixture. Thus, the nonaqueous electrolyte solution according to Embodiment 1 is obtained.

The method for manufacturing the nonaqueous electrolyte solution is not limited to the one described above. For example, an ultrasonic homogenizer may be used to disperse the particles of the phosphorus-containing compound in a nonaqueous solvent having electrolyte salts dissolved therein.

### (Embodiment 2)

A nonaqueous electrolyte secondary battery according to Embodiment 2 includes a positive electrode, a negative electrode, and the nonaqueous electrolyte solution according to Embodiment 1. By using the nonaqueous electrolyte solution according to Embodiment 1, the cycle characteristics of the secondary battery can be enhanced.

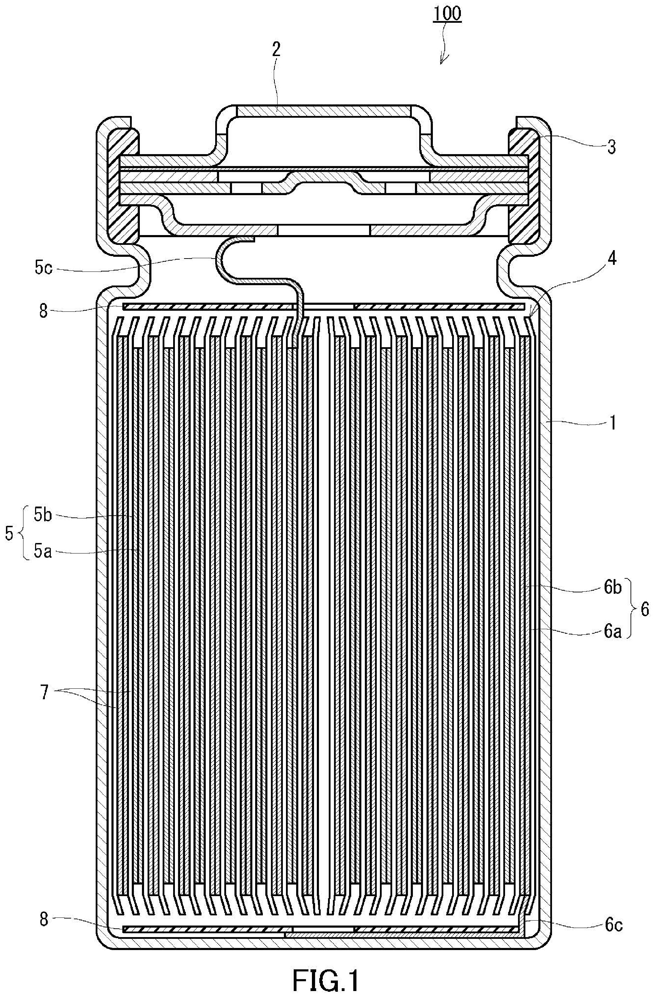

FIG. 1 is a cross-sectional view schematically showing an example of the nonaqueous electrolyte secondary battery according to Embodiment 2. A secondary battery 100 includes a container 1, an electrode group 4, and an electrolyte solution that is not shown. The electrolyte solution is the nonaqueous electrolyte solution according to Embodiment 1. The electrode group 4 has a wound structure. The electrode group 4 is housed in the container 1. The electrode group 4 includes a positive electrode 5, a negative electrode 6, and a pair of separators 7. The electrode group 4 is impregnated with the electrolyte solution. The opening of the container 1 is sealed with a sealing plate 2. The positive electrode 5 includes a positive electrode current collector 5a and a positive electrode active material layer 5b. To the positive electrode 5, one end of a positive electrode lead 5c is connected. The other end of the positive electrode lead 5c is connected to the back surface of the sealing plate 2. An insulating gasket 3 is disposed to surround the sealing plate 2. The negative electrode 6 includes a negative electrode current collector 6a and a negative electrode active material layer 6b. To the negative electrode 6, one end of a negative electrode lead 6c is connected. The other end of the negative electrode lead 6c is connected to the bottom surface of the container 1. An insulating ring 8 is disposed on each of the upper and lower surfaces of the electrode group 4.

The components of the secondary battery 100 are specifically described below.

As the positive electrode current collector 5a, a sheet or film formed of a metal material such as aluminum, stainless steel, titanium, or an alloy of any of these can be used. Aluminum and alloys thereof are inexpensive and can be easily formed into thin films, and are accordingly suitable as materials of the positive electrode current collector 5a. The sheet or film may be porous or non-porous. As the sheet or film, a metal foil, a metal mesh, or the like is used. A carbon material, such as carbon, may be applied as a conductive auxiliary material to the surface of the positive electrode current collector 5a.

The positive electrode active material layer 5b includes a positive electrode active material. The positive electrode active material can be a material capable of occluding and releasing lithium ions. The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, when a lithium-containing transition metal oxide or a lithium-containing transition metal phosphate is used as the positive electrode active material, the battery manufacturing cost can be reduced and the average discharge voltage can be increased. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates.

The positive electrode active material may include a lithium nickel oxide having a layered rock salt-type crystal structure. The proportion of Ni among the metal elements contained in the lithium nickel oxide except for Li may be 50 at% or more. The lithium nickel oxide may include an additional transition metal. The lithium nickel oxide is useful for achieving a high operating voltage.

The lithium nickel oxide may be represented by the following composition formula (I). The element M1 is at least one selected from the group consisting of V, Co, and Mn. The element M2 is at least one selected from the group consisting of Mg, Al, Ca, Ti, Cu, Zn, and Nb. The composition formula (I) satisfies 0.9 ≤ α ≤ 1.10, -0.05 ≤ β ≤ 0.05, 0.5 ≤ x1 < 1, 0 ≤ x2 ≤ 0.5, and 0 < 1 - x1 - x2 ≤ 0.5.

Li_{α}Niₓ₁M1ₓ₂M2₍₁₋ₓ₁₋ₓ₂₎O_{2+β} (I)

The positive electrode active material layer 5b may include other materials such as a conductive additive and a binder.

The conductive additive is used to reduce the resistance of the positive electrode 5. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene.

The binder is used to enhance the binding properties of the materials constituting the positive electrode 5. The binder can be a polymer material, such as polyvinylidene fluoride, a vinylidene fluoride-hexafluoropropylene copolymer, a vinylidene fluoride-tetrafluoroethylene copolymer, polytetrafluoroethylene, carboxymethylcellulose, polyacrylic acid, styrene-butadiene copolymer rubber, polypropylene, polyethylene, or polyimide.

As the negative electrode current collector 6a, a sheet or film formed of a metal material such as stainless steel, nickel, copper, or an alloy of any of these can be used. The sheet or film may be porous or non-porous. As the sheet or film, a metal foil, a metal mesh, or the like is used. A carbon material, such as carbon, may be applied as a conductive auxiliary material to the surface of the negative electrode current collector 6a.

The negative electrode active material layer 6b includes a negative electrode active material. The negative electrode active material can be a material capable of occluding and releasing lithium ions. The negative electrode active material includes, for example, at least one selected from the group consisting of lithium metal, a carbon material, and a material capable of forming an alloy with lithium. Examples of the carbon material include graphite. Examples of the material capable of forming an alloy with lithium include silicon, a silicon-containing oxide, tin, a zinc alloy, bismuth, and germanium. One selected from these negative electrode active materials may be used, or two or more selected from these negative electrode active materials may be used in combination.

The negative electrode active material layer 6b may include, as the negative electrode active material, at least one selected from the group consisting of graphite and silicon. The negative electrode active material layer 6b may include only graphite as the negative electrode active material. Graphite is recommended because graphite is less susceptible to deterioration even after repeated charging and discharging at a high depth. A carbon material other than graphite may be used as the negative electrode active material. Silicon exhibits higher capacity than graphite and is accordingly advantageous for increasing the capacity of the secondary battery 100.

The negative electrode 6 (negative electrode active material layer 6b) may include lithium metal as a negative electrode active material. The nonaqueous electrolyte solution of Embodiment 1 includes the first lithium salt having an oxalate structure. The first lithium salt having an oxalate structure can form a robust solid electrolyte interphase that can withstand expansion and contraction of lithium metal.

The negative electrode active material layer 6b may include other materials such as a conductive additive and a binder. The materials that can be used as the conductive additive and the binder in the positive electrode active material layer 5b can also be used in the negative electrode active material layer 6b.

The electrolyte solution is the nonaqueous electrolyte solution according to Embodiment 1. The positive electrode 5, the negative electrode 6, and the separator 7 are impregnated with the electrolyte solution. The electrolyte solution may fill the interior space of the container 1. The action of the electrolyte solution allows lithium ions to migrate between the positive electrode 5 and the negative electrode 6.

The average particle diameter of the particles of the phosphorus-containing compound contained in the electrolyte solution may be equal to or smaller than the pore diameter of the separator 7.

The separator 7 has lithium-ion conductivity. The material of the separator 7 may be any material through which lithium ions are allowed to pass. The material of the separator 7 can be at least one selected from the group consisting of a gel electrolyte, an ion exchange resin membrane, a semipermeable membrane, and a porous membrane. When the separator 7 is formed of any of these materials, the safety of the secondary battery 100 can be sufficiently ensured. Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes containing glass paper obtained by incorporating glass fibers into a nonwoven fabric. By using the nonaqueous electrolyte solution according to Embodiment 1 in the secondary battery 100, the oxidation of the separator 7 is suppressed, and thus a decrease in the strength of the separator 7 can be reduced.

The container 1 is, for example, a container made of a metal such as aluminum or stainless steel. The container 1 may have a cylindrical shape or a prismatic shape.

The electrode group 4 may be wound in a cylindrical shape or an elliptical shape.

The secondary battery 100 is not limited to any particular shape. In the present disclosure, as an example of the structure of the nonaqueous electrolyte secondary battery according to Embodiment 2, the configuration example shown in FIG. 1 is described. In this configuration example, a secondary battery includes an electrode group, in which a positive electrode and a negative electrode are wound with a separator interposed therebetween, and an electrolyte solution, both of which are housed in an outer casing. However, the secondary battery according to the present disclosure is not limited to this configuration example. The secondary battery according to the present disclosure may be in any form, such as a cylindrical type, a prismatic type, a coin type, a button type, or a laminated type. Furthermore, as the electrode group in the secondary battery according to the present disclosure, the wound-type electrode group may be replaced with any other type of electrode group, such as a stacked-type electrode group in which a positive electrode and a negative electrode are stacked with a separator interposed therebetween.

### (Other Embodiments)

### (Supplementary Description)

From the description of the above embodiments, the following techniques are disclosed.

### (Technique 1)

A nonaqueous electrolyte solution including:
a nonaqueous solvent;
a phosphorus-containing compound; and
two or more electrolyte salts dissolved in the nonaqueous solvent, wherein
the two or more electrolyte salts include a first lithium salt having an oxalate structure and a second lithium salt.

According to Technique 1, the cycle characteristics of a battery can be enhanced.

### (Technique 2)

The nonaqueous electrolyte solution according to Technique 1, wherein the first lithium salt includes at least one selected from the group consisting of LiFOB, LiBOB, LiTFOP, and LiDOBFP. With these first lithium salts, the viscosity of the nonaqueous electrolyte solution can be easily reduced while the effect of the phosphorus-containing compound is maintained.

### (Technique 3)

The nonaqueous electrolyte solution according to Technique 1 or 2, wherein the first lithium salt is dissolved in the nonaqueous solvent at a concentration of 0.005 mol/L or more and 0.70 mol/L or less. By appropriately adjusting the concentration of the first lithium salt, the effect of the first lithium salt can be achieved while the required performance of the nonaqueous electrolyte solution is maintained.

### (Technique 4)

The nonaqueous electrolyte solution according to any one of Techniques 1 to 3, wherein the second lithium salt includes at least one selected from the group consisting of LiPF₆, LiBF₄, LiClO₄, LiFSI, LiTFSI, LiN(SO₂C₂F₅)₂, LiAsF₆, and LiCF₃SO₃. These are lithium salts having excellent characteristics and are accordingly recommended as the second lithium salt.

### (Technique 5)

The nonaqueous electrolyte solution according to any one of Techniques 1 to 4, wherein a proportion of the first lithium salt in the electrolyte salts, on an amount-of-substance basis, is equal to a proportion of the second lithium salt in the electrolyte salts or smaller than the proportion of the second lithium salt in the electrolyte salts. According to such a configuration, the characteristics of the second lithium salt have a dominant influence on the nonaqueous electrolyte solution, and accordingly, the type of the second lithium salt can be easily selected such that a nonaqueous electrolyte solution having desired performance is obtained.

### (Technique 6)

The nonaqueous electrolyte solution according to any one of Techniques 1 to 5, wherein the phosphorus-containing compound includes at least one selected from the group consisting of Li₃PO₄, Na₃PO₄, LiPO₃, LiPO₃F, metaphosphoric acid, and P₂O₅. According to the above configuration, the cycle characteristics of a battery can be enhanced.

### (Technique 7)

The nonaqueous electrolyte solution according to any one of Techniques 1 to 6, wherein the phosphorus-containing compound includes Li₃PO₄. According to the above configuration, the cycle characteristics of a battery can be enhanced.

### (Technique 8)

The nonaqueous electrolyte solution according to any one of Techniques 1 to 7, wherein a content of the phosphorus-containing compound in the nonaqueous electrolyte solution is 0.1 vol% or more and 10 vol% or less.

### (Technique 9)

The nonaqueous electrolyte solution according to any one of Techniques 1 to 8, wherein the phosphorus-containing compound is insoluble in the nonaqueous solvent, particles of the phosphorus-containing compound are included in the nonaqueous electrolyte solution, and an average particle diameter of the particles is 1 nm or more and 500 nm or less. According to the above configuration, favorable dispersibility of the particles of the phosphorus-containing compound and favorable fluidity of the nonaqueous electrolyte solution can be achieved.

### (Technique 10)

A nonaqueous electrolyte secondary battery including:
a positive electrode;
a negative electrode; and
the nonaqueous electrolyte solution according to any one of Techniques 1 to 9.

According to Technique 10, a nonaqueous electrolyte secondary battery having enhanced cycle characteristics can be provided.

### (Technique 11)

The nonaqueous electrolyte secondary battery according to Technique 10, wherein the negative electrode includes lithium metal as a negative electrode active material. The technique of the present disclosure is particularly useful for a nonaqueous electrolyte secondary battery including lithium metal as a negative electrode active material.

### EXAMPLES

### (Reference Example 1)

### (Preparation of Nonaqueous Electrolyte Solution)

Ethylene carbonate (EC), fluoroethylene carbonate (FEC), ethyl methyl carbonate (EMC), and dimethyl carbonate (DMC) were mixed in a volume ratio of EC:FEC:EMC:DMC = 10:10:5:75 to prepare a nonaqueous solvent. In the nonaqueous solvent thus obtained, LiPF₆ was dissolved to a concentration of 1.0 mol/L to obtain a solution. An amount of 15 g of the solution obtained, an appropriate amount of vinylene carbonate (VC), 1.2 g of Li₃PO₄ particles (average particle diameter: 10 µm) as the particles of the phosphorus-containing compound, and 70 g of ZrO₂ balls (average particle diameter: 0.5 mm) as a mixing medium were introduced into a ball mill and mixed at 300 rpm for 2 hours. The average particle diameter of the Li₃PO₄ particles after mixing was 50 nm. The supernatant of the resulting liquid mixture was drawn off using a pipette to remove the ZrO₂ balls, and thus the nonaqueous electrolyte solution of Reference Example 1 was obtained. In the nonaqueous electrolyte solution of Reference Example 1, the Li₃PO₄ particles were dispersed at 4 vol%. The content of vinylene carbonate in the nonaqueous electrolyte solution of Reference Example 1 was 1.5 mass%. The nonaqueous electrolyte solution of Reference Example 1 exhibited fluidity at 25°C.

### (Example 1)

The nonaqueous electrolyte solution of Example 1 was obtained in the same manner as in Reference Example 1, except that LiPF₆ and LiFOB were used in combination as the electrolyte salts. In Example 1, LiPF₆ was dissolved in the nonaqueous solvent at a concentration of 0.99 mol/L, and LiFOB was dissolved in the nonaqueous solvent at a concentration of 0.01 mol/L.

### (Examples 2 to 6)

The nonaqueous electrolyte solutions of Examples 2 to 6 were obtained in the same manner as in Example 1, except that the concentration of LiPF₆ and the concentration of LiFOB were changed to the values shown in Table 1.

### (Comparative Examples 1 to 7)

The nonaqueous electrolyte solutions of Comparative Examples 1 to 7 were obtained in the same manner as in Reference Example 1 and Examples 1 to 6, except that the Li₃PO₄ particles were not included.

The viscosities of the nonaqueous electrolyte solutions of the examples and comparative examples at 25°C were measured. For the viscosity measurement, "MCR92", manufactured by Anton Paar GmbH, was used. Viscoelastic data were acquired using a cone-type measuring element under conditions of a measurement gap of 0.21 mm and a stage temperature of 25°C while the angular velocity was varied. For the viscosity, the value at an angular velocity of 1,000 rad/s was used. The results are shown in Table 1.

### [Fabrication of Test Cells]

Test cells were fabricated using the respective nonaqueous electrolyte solutions of Comparative Examples 1 to 7, Reference Example 1, and Examples 1 to 6 by the following procedure.

A positive electrode active material having the composition LiNi_{0.6}Co_{0.2}Mn_{0.2}O₂, acetylene black (AB), and polyvinylidene fluoride (PVDF) were stirred with the addition of N-methyl-2-pyrrolidone (NMP) to prepare a positive electrode slurry. The mass ratio of these materials in the positive electrode active material layer was positive electrode active material:AB:PVDF = 96:2:2.

The positive electrode slurry was applied to the surface of an aluminum foil (1.45 cm × 1.45 cm), and the coating film was dried and then rolled to form the positive electrode active material layer. Thus, the positive electrode was obtained.

An appropriate amount of water was added to a negative electrode mixture, and these were mixed to obtain a negative electrode slurry. The negative electrode mixture used was a mixture of a negative electrode active material, a binder, and a conductive agent. The negative electrode active material used was graphite (average particle diameter (D50): 25 µm). The binder used was sodium polyacrylate (PAA-Na), sodium salt of CMC (CMC-Na), and styrene-butadiene rubber (SBR). The respective contents of PAA-Na, CMC-Na, and SBR in the negative electrode mixture were set to 1 mass%. Next, the negative electrode slurry was applied to the surface of a copper foil, and the coating film was dried and then rolled to form a negative electrode mixture layer (thickness: 80 µm; density: 1.6 g/cm³), and thus a negative electrode was obtained.

An evaluation cell was fabricated using the positive electrode, the negative electrode, a separator, and the nonaqueous electrolyte solution. The separator used was a polyethylene separator (#2320, manufactured by Celgard, LLC).

Thus, the evaluation cells of Comparative Examples 1 to 7, Reference Example 1, and Examples 1 to 6 were obtained.

### [Cycle Test]

A cycle test was performed on each evaluation cell by the following procedure. At an ambient temperature of 45°C, each evaluation cell was subjected to a constant-current charge at a current value of 0.2C until the voltage reached 4.3 V. Thereafter, a constant-current discharge was performed at a current value of 0.2C until the voltage reached 2.5 V. The above charge and discharge were defined as one cycle, and this cycle was repeated 50 times to evaluate the capacity retention. The results are shown in Table 1. In Table 1, the capacity retention represents the ratio of the 50th-cycle discharge capacity to the 1st-cycle discharge capacity.

In the cycle test, the volume of gas generated in the evaluation cell was also measured by volume measurement based on the Archimedes method. Specifically, the weight of the evaluation cell in air and the weight of the evaluation cell in water at 25°C were measured, and the volume of the evaluation cell was calculated from the difference in weight. The same operation was performed before and after the cycle test, and the change in the volume of the evaluation cell was regarded as the volume of gas. The volume of gas derived from LiFOB (unit: mL) in Example 1 was calculated from the measured value of the volume of gas using the following Equation 1 and Equation 2. In the same manner, the volumes of gas derived from LiFOB (unit: mL) in Examples 2 to 6 were calculated. The results are shown in Table 1.

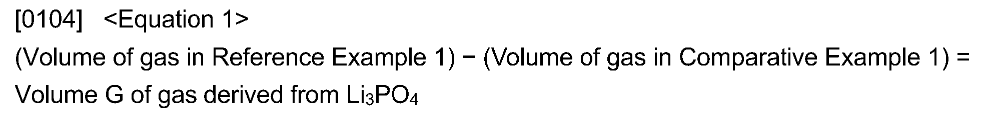

<Equation 1> (Volume of gas in Reference Example 1) - (Volume of gas in Comparative Example 1) = Volume G of gas derived from Li3PO4 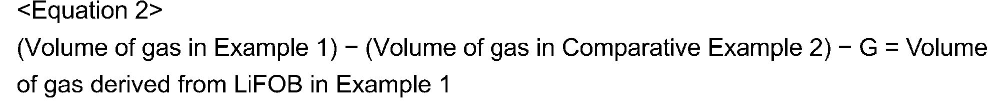 <Equation 2> (Volume of gas in Example 1) - (Volume of gas in Comparative Example 2) - G = Volume of gas derived from LiFOB in Example 1

**[Table 1]**

| | LiPF₆ concentration* (mol/L) | LiFOB concentration* (mol/L) | Li₃PO₄ (vol%) | Viscosity of nonaqueous electrolyte solution (mPa·sec) | Capacity retention at 50 cycles (%) | LiFOB-derived gas volume (mL) |
|---|---|---|---|---|---|---|
| Comparative Example 1 | 1.0 | 0 | 0 | 2.836 | 93.7 | - |
| Comparative Example 2 | 0.99 | 0.01 | 0 | 2.833 | 93.8 | - |
| Comparative Example 3 | 0.97 | 0.03 | 0 | 2.828 | 93.6 | - |
| Comparative Example 4 | 0.95 | 0.05 | 0 | 2.823 | 93.4 | - |
| Comparative Example 5 | 0.90 | 0.10 | 0 | 2.811 | 93.0 | - |
| Comparative Example 6 | 0.75 | 0.25 | 0 | 2.774 | 90.7 | - |
| Comparative Example 7 | 0.50 | 0.50 | 0 | 2.713 | 86.9 | - |
| Reference Example 1 | 1.0 | 0 | 4 | 9.213 | 93.9 | - |
| Example 1 | 0.99 | 0.01 | 4 | 9.186 | 93.9 | 0.23 |
| Example 2 | 0.97 | 0.03 | 4 | 9.132 | 93.9 | 0.28 |
| Example 3 | 0.95 | 0.05 | 4 | 9.078 | 94.1 | 0.04 |
| Example 4 | 0.90 | 0.10 | 4 | 8.942 | 94.0 | -0.29 |
| Example 5 | 0.75 | 0.25 | 4 | 8.536 | 92.1 | -0.08 |
| Example 6 | 0.50 | 0.50 | 4 | 7.858 | 87.9 | -0.69 |

| | | | | | | |
|---|---|---|---|---|---|---|
| *LiPF₆ and LiFOB concentrations are concentrations at the time of dissolution in the nonaqueous solvent. | | | | | | |

In Table 1, Example 1 is compared with Comparative Example 2, in which the proportion of LiFOB is equal to that in Example 1. Similarly, Examples 2 to 6 are compared with Comparative Examples 3 to 7, respectively. As shown in Table 1, the capacity retentions of the evaluation cells of Examples 1 to 6 at 50 cycles exceeded those of the corresponding Comparative Examples 2 to 7.

As shown in Table 1, the viscosity of the nonaqueous electrolyte solution of Reference Example 1 was higher than the viscosities of the nonaqueous electrolyte solutions of Comparative Examples 1 to 7. On the other hand, the evaluation cell of Reference Example 1 exhibited a higher capacity retention than the capacity retentions of the evaluation cells of Comparative Examples 1 to 7.

The viscosities of the nonaqueous electrolyte solutions of Examples 1 to 6 were lower than the viscosity of the nonaqueous electrolyte solution of Reference Example 1. That is, LiFOB exhibited an effect of reducing the viscosity of the nonaqueous electrolyte solution.

In the evaluation cell of Example 3, the volume of gas derived from LiFOB was extremely small. In the evaluation cells of Examples 4 to 6, the volume of gas derived from LiFOB exhibited negative values. A negative value of the volume of gas derived from LiFOB indicates that the addition of LiFOB reduced the volume of gas generated. That is, when an appropriate amount of the first lithium salt having an oxalate structure was included, not only an effect of enhancing the capacity retention of the evaluation cell but also an effect of reducing the volume of gas generated was achieved.

According to Examples 1 to 6, the amount of the first lithium salt suitable for obtaining an effect of enhancing cycle characteristics and an effect of suppressing the amount of gas generated while achieving the purpose of appropriately adjusting the viscosity of the nonaqueous electrolyte solution is considered to be as follows. That is, the first lithium salt may be dissolved in the nonaqueous solvent at a concentration of more than 0.03 mol/L and less than 0.25 mol/L, and more desirably at a concentration of 0.04 mol/L or more and 0.15 mol/L or less.

### INDUSTRIAL APPLICABILITY

The technique of the present disclosure is useful, for example, in lithium-ion secondary batteries.

## Claims

1. A nonaqueous electrolyte solution comprising:
a nonaqueous solvent;
a phosphorus-containing compound; and
two or more electrolyte salts dissolved in the nonaqueous solvent, wherein
the two or more electrolyte salts comprise a first lithium salt having an oxalate structure and a second lithium salt.

2. The nonaqueous electrolyte solution according to claim 1, wherein
the first lithium salt comprises at least one selected from the group consisting of LiFOB, LiBOB, LiTFOP, and LiDOBFP.

3. The nonaqueous electrolyte solution according to claim 1, wherein
the first lithium salt is dissolved in the nonaqueous solvent at a concentration of 0.005 mol/L or more and 0.70 mol/L or less.

4. The nonaqueous electrolyte solution according to claim 1, wherein
the second lithium salt comprises at least one selected from the group consisting of LiPF₆, LiBF₄, LiClO₄, LiFSI, LiTFSI, LiN(SO₂C₂F₅)₂, LiAsF₆, and LiCF₃SO₃.

5. The nonaqueous electrolyte solution according to claim 1, wherein
a proportion of the first lithium salt in the electrolyte salts, on an amount-of-substance basis, is equal to a proportion of the second lithium salt in the electrolyte salts or smaller than the proportion of the second lithium salt in the electrolyte salts.

6. The nonaqueous electrolyte solution according to claim 1, wherein
the phosphorus-containing compound comprises at least one selected from the group consisting of Li₃PO₄, Na₃PO₄, LiPO₃, LiPO₃F, metaphosphoric acid, calcium phosphate, and P₂O₅.

7. The nonaqueous electrolyte solution according to claim 1, wherein
the phosphorus-containing compound comprises Li₃PO₄.

8. The nonaqueous electrolyte solution according to claim 1, wherein
a content of the phosphorus-containing compound in the nonaqueous electrolyte solution is 0.1 vol% or more and 10 vol% or less.

9. The nonaqueous electrolyte solution according to claim 1, wherein
the phosphorus-containing compound is insoluble in the nonaqueous solvent,
particles of the phosphorus-containing compound are included in the nonaqueous electrolyte solution, and
an average particle diameter of the particles is 1 nm or more and 500 nm or less.

10. A nonaqueous electrolyte secondary battery comprising:
a positive electrode;
a negative electrode; and
the nonaqueous electrolyte solution according to claim 1.

11. The nonaqueous electrolyte secondary battery according to claim 10, wherein
the negative electrode comprises lithium metal as a negative electrode active material.
